# EUROPÄISCHE PATENTSCHRIFT

(11) **EP 1 197 935 B1**
(45) Veröffentlichungstag und Bekanntmachung des Hinweises auf die Patenterteilung: **26.01.2005**
(21) Anmeldenummer: 01124168.4
(22) Anmeldetag: 10.10.2001
(51) Int. Cl.: G08B 13/196, G08B 13/194

(54) **Vorrichtung und Verfahren zur Erfassung von Objekten**
Device and method for détection of objects
Dispositif et procédé pour la détection d'objets

(30) Priorität: 10.10.2000 DE 10050083
(43) Veröffentlichungstag der Anmeldung: 17.04.2002
(73) Patentinhaber: Sick AG, 79183 Waldkirch, Breisgau (DE)
(72) Erfinder: Wüstefeld, Martin, 79350 Sexau (DE); Plasberg, Georg, Dr., 79353 Bahlingen (DE)
(74) Vertreter: Manitz, Finsterwald & Partner GbR

(56) Entgegenhaltungen:
- DE-A- 4 430 016
- DE-A- 19 809 210
- US-A- 6 075 238

## Beschreibung

Die Erfindung betrifft eine Vorrichtung und ein Verfahren zur Erfassung eines sich im Überwachungsbereich einer Kamera bewegenden Objektes.

Bei derartigen Verfahren bzw. Vorrichtungen wird üblicherweise (siehe z.B. DE-A-19809210) ein Referenzbild mit objektfreiem Überwachungsbereich aufgenommen und gespeichert. Während der tatsächlich erfolgenden Überwachung werden dann kontinuierlich Bilder des Überwachungsbereichs aufgenommen und mit dem gespeicherten Referenzbild verglichen. Wenn sich hier Abweichungen ergeben, wird vom Vorhandensein eines Objektes ausgegangen und eine entsprechende Reaktion, beispielsweise ein Abschalten einer Maschine, ausgelöst. Der Vergleich der aufgenommenen Bilder mit dem gespeicherten Referenzbild erfolgt dabei beispielsweise derart, daß die Helligkeit einander bezüglich ihrer räumlichen Position entsprechender Pixel von Referenzbild und aktuell aufgenommenem Bild miteinander verglichen werden und dann eine Reaktion ausgelöst wird, wenn die ermittelte Helligkeit einer bestimmten Anzahl von Pixeln des aktuell aufgenommenen Bildes nicht mit den entsprechenden Helligkeiten der Pixel des Referenzbildes übereinstimmen.

Problematisch beim Einsatz bekannter Vorrichtungen und bekannter Verfahren der genannten Art ist die Tatsache, daß sich die Kamera und/oder Teile des Überwachungsbereichs beispielsweise infolge von zulässigen Erschütterungen oder Schwingungen bewegen können, was dann zu Veränderungen in den aufgenommenen Bildern und bei objektfreiem Überwachungsbereich zu einer ungewollten Auslösung von Reaktionen führen kann. Konkret ist es beispielsweise möglich, daß mit der Kamera ein Gefahrenbereich einer Maschine überwacht wird und ein Abschalten der Maschine immer dann erfolgen soll, wenn sich eine Person in den Überwachungsbereich hineinbewegt. Eine solche Person bewirkt natürlich Helligkeitsunterschiede in den während der Überwachung aufgenommenen Bildern gegenüber einem objektfreien Referenzbild, so daß beim Eindringen von Personen in den Überwachungsbereich in gewünschter Weise ein Anhalten der Maschine erfolgen kann. Wenn nun aber beispielsweise ein Fahrzeug an der überwachten Maschine vorbeifährt und Erschütterungen erzeugt, die entweder die Kamera oder die Maschine geringfügig bewegen, wird auch in diesem Fall aufgrund der Unterschiede zwischen den aufgenommenen Bildern und dem Referenzbild ein - unerwünschtes-Anhalten der Maschine erfolgen, obwohl sich keine Person im Überwachungsbereich befindet.

Eine Aufgabe der Erfindung besteht darin, ein Verfahren bzw. eine Vorrichtung der eingangs genannten Art derart weiterzubilden, daß einerseits ein unbeabsichtigtes Auslösen von Reaktionen verhindert und andererseits gleichzeitig sichergestellt wird, daß beim Eindringen von Objekten oder Personen in den Überwachungsbereich das verläßliche Auslösen einer Reaktion gewährleistet ist.

Nach dem erfindungsgemäßen Verfahren wird diese Aufgabe gelöst, indem
- von der Kamera ein aktuelles Bild des Überwachungsbereiches aufgenommen wird,
- aus dem aktuell aufgenommenen Bild mindestens eine aktuelle Meßgröße abgeleitet wird, die Aufschluß über Unterschiede zwischen zumindest zwei verschiedenen Bildbereichen liefert, und die gegenüber Bildverschiebungen, Bilddrehungen und/oder Bildgrößenänderungen invariant ist,
- diese aktuelle Meßgröße mit einer entsprechenden, aus einem von der Kamera aufgenommenen Referenzbild abgeleiteten und gespeicherten Referenzgröße verglichen wird, und
- bei einer vorgegebenen Abweichung der aktuellen Meßgröße von der Referenzgröße eine Objekterkennungsreaktion ausgelöst wird.

Nach der erfindungsgemäßen Vorrichtung wird diese Aufgabe gelöst, durch
- eine Kamera zur Aufnahme eines Bildes des Überwachungsbereiches,
- eine Einrichtung zur Ableitung zumindest einer aktuellen Meßgröße aus dem aktuell aufgenommenen Bild, wobei die Meßgröße Aufschluß über Unterschiede zwischen zumindest zwei verschiedenen Bildbereichen liefert, und gegenüber Bildverschiebungen, Bilddrehungen und/oder Bildgrößenänderungen invariant ist,
- eine Vergleichseinrichtung zum Vergleich dieser aktuelle Meßgröße mit einer entsprechenden, aus einem von der Kamera aufgenommenen Referenzbild abgeleiteten und gespeicherten Referenzgröße, und
- eine Objekterkennungsstufe zur Auslösung einer Objekterkennungsreaktion bei Feststellung einer vorgegebenen Abweichung der aktuellen Meßgröße von der Referenzgröße.

Erfindungsgemäß wird also nicht wie beim Stand der Technik jedes Pixel eines aufgenommenen Bildes mit dem entsprechenden Pixel des Referenzbildes verglichen, sondern es werden sowohl aus dem Referenzbild als auch aus den aktuell aufgenommenen Bildern Referenz- bzw. Meßgrößen ermittelt, die lediglich Aufschluß über Unterschiede zwischen verschiedenen Bereichen der jeweiligen Bilder liefern. Bezogen auf ein Referenzbild oder ein aktuell aufgenommenes Bild werden also jeweils nur Relativinformationen untersucht und nicht wie beim Stand der Technik absolute Informationen, wie z.B. die Helligkeit eines bestimmten Pixels. Diese erfindungsgemäß ermittelten Relativinformationen eines aktuell aufgenommennen Bildes werden dann mit den entsprechenden Relativinformationen des Referenzbildes verglichen. Nur wenn hier ausreichend große Unterschiede festgestellt werden, wird eine Reaktion ausgelöst. Die genannten Relativinformationen weisen gegenüber Absolutinformationen den Vorteil auf, daß sie gegenüber Bildverschiebungen, Bilddrehungen und/oder Bildgrößenänderungen invariant sein können, so daß z.B. Erschütterungen der Kamera oder des Überwachungsbereichs nicht zu einer Veränderung der Relativinformation bzw. der ermittelten Meßgröße führen.

Bevorzugt wird dem Referenzbild sowie dem aktuell aufgenommenen Bild eine Struktur überlagert, die Bestandteil des Bildes ist. Die Referenz- und Meßgrößen werden dann aus der entsprechenden Strukturinformation gewonnen.
Beispielsweise kann der objektfreie Überwachungsbereich mit einer Gitterstruktur versehen werden, die dann als Strukturinformation erkannt wird, woraufhin beispielsweise die Abstände verschiedener Gitterlinien zueinander als erfindungsgemäße Referenz- bzw. Meßgrößen ermittelt werden. Derartige, hier lediglich beispielhaft angeführte Meß- bzw. Referenzgrößen sind erfindungsgemäß gegenüber Bildverschiebungen und Bilddrehungen invariant, was zur Folge hat, daß sich diese Meßgrößen nicht verändern, wenn die Überwachungskamera beispielsweise in Schwingung versetzt wird. Da sich die Meßgrößen gegenüber den Referenzgrößen in einem solchen Fall, in dem lediglich die Kamera in Schwingung versetzt wurde und sich kein Objekt im Überwachungsbereich befindet, also nicht verändern, wird dementsprechend in erwünschter Weise auch keine Reaktion ausgelöst.
Wenn sich jedoch ein Objekt in den Überwachungsbereich hineinbewegt, wird dieses Objekt entweder eine fest im Überwachungsbereich angebrachte Gitterstruktur überdecken oder die Gitterlinien einer in den Überwachungsbereich hineinprojizierten Gitterstruktur werden sich unterschiedlich stark verschieben. Dies führt dann jeweils zu einer Veränderung der ermittelten Meßgrößen und dementsprechend auch zu einer erwünschten Auslösung einer Reaktion, beispielsweise einem Abschalten einer Maschine.

Wie bereits erwähnt, kann die Struktur im Überwachungsbereich während der Aufnahme des Referenzbildes und der aktuellen Bilder des Überwachungsbereichs mittels einer Projektionseinrichtung, ebenso jedoch auch mittels eines bewegten Lichtstrahls, beispielsweise eines Laserstrahls, erzeugt werden. Dies hat den Vorteil, daß der Überwachungsbereich in keiner Weise manipuliert werden muß, beispielsweise durch Aufkleben einer Strukturfolie.

Von Vorteil ist weiterhin, wenn gleichzeitig oder zeitlich nacheinander voneinander verschiedene Strukturen im Überwachungsbereich erzeugt werden, da dann das erfindungsgemäße Verfahren bezogen auf jede einzelne Struktur durchgeführt werden kann, was das Risiko für fehlerhafte Reaktionsauslösungen oder fehlerhaft unterbleibende Reaktionsauslösungen verringert. Für die Erzeugung der verschiedenen Strukturen können dabei verschiedene Projektionseinrichtungen bzw. verschiedene Einrichtungen zur Erzeugung des bewegten Lichtstrahls verwendet werden; ebenso ist es jedoch auch möglich, verschiedene Strukturen mittels einer einzigen Einrichtung zu erzeugen.

Bevorzugt wird erfindungsgemäß eine Reaktion nur dann ausgelöst, wenn der Vergleich der aktuellen Meßgröße mit der Referenzgröße einen Vergleichswert liefert, der außerhalb eines vorgegebenen Toleranzbereichs liegt. Dies verringert zusätzlich das Risiko für Fehlauslösungen, da innerhalb des Toleranzbereichs liegende Unterschiede zwischen Meßgröße und Referenzgröße keine Reaktionsauslösungen bewirken.

Von Vorteil ist es, wenn die Bild- oder Strukturinformation u.a. auf Referenzpunkte bezogene Informationen umfaßt, wobei die Referenzpunkte insbesondere die Grenzen des Überwachungsbereichs markieren. Diese Referenzpunkte erleichtern das Auffinden der Strukturinformation und verringern die Komplexität der erforderlichen Bilderkennungsalgorithmen. Für die Markierung der Referenzpunkte können Reflektoren verwendet werden, die relativ zum Überwachungsbereich an unveränderlichen Positionen angeordnet werden und beispielsweise den Rand des Überwachungsbereichs markieren.

Besonders bevorzugt ist es, wenn aus der aktuellen Bild- oder Strukturinformation eine Vielzahl von aktuellen Meßgrößen gleichen oder unterschiedlichen Typs abgeleitet und mit entsprechenden, aus der Bild- oder Strukturinformation des Referenzbildes abgeleiteten und gespeicherten Referenzgrößen verglichen wird. Durch die Verwendung von mehreren Meßgrößen kann das Risiko für fehlerhafte Reaktionen oder fehlerhaft unterbleibende Reaktionen zusätzlich verringert werden.

Die Meß- und bzw. Referenzgrößen können bevorzugt eine oder mehrere der nachfolgend genannten Informationen beinhalten:
- Abstand zwischen zwei verschiedenen Bild- oder Strukturbereichen oder zwischen einem Referenzpunkt und einem Bild- oder Strukturbereich
- Helligkeitsunterschied zwischen zwei verschiedenen Bild- oder Strukturbereichen oder zwischen einem Referenzpunkt und einem Bild- oder Strukturbereich
- Farbunterschied zwischen zwei verschiedenen Bild- oder Strukturbereichen oder zwischen einem Referenzpunkt und einem Bild- oder Strukturbereich
- Helligkeitsgradient zwischen zwei verschiedenen Bild- oder Strukturbereichen oder zwischen einem Referenzpunkt und einem Bild- oder Strukturbereich.

Allen vorstehend genannten Informationen ist gemeinsam, daß sie lediglich Relativinformationen und keine Absolutinformationen darstellen.

Von Vorteil ist es, wenn alternativ oder zusätzlich eine Korrelationsfunktion zwischen zumindest einem Bereich der aktuellen Bild- oder Strukturinformation und einem entsprechenden Bereich der Bild- oder Strukturinformation des Referenzbildes berechnet wird und der Verlauf dieser Korrelationsfunktion und/oder bestimmte Werte dieser Korrelationsfunktion zur Entscheidung bezüglich des Auslösens einer Objekterkennungsreaktion herangezogen werden. Diese Variante macht sich den Vorteil zunutze, daß auch eine Korrelationsfunktion letztlich nur eine Relativinformation darstellt, die beispielsweise durch Verschiebungen oder Verdrehungen von Bildbereichen nicht beeinflußt wird.

Bevorzugt wird der Überwachungsbereich während der Aufnahme des Referenzbildes und der aktuellen Bilder des Überwachungsbereichs mittels zumindest einer Beleuchtungsquelle ausgeleuchtet. Dies ermöglicht die Erfassung von problemlos weiter verarbeitbaren Bildern durch die Kamera.

Die Funktionsfähigkeit der verwendeten Kamera kann geprüft werden, indem regelmäßig Bilder mit und ohne im Überwachungsbereich erzeugter Struktur aufgenommen werden und anschließend überprüft wird, ob die Strukturinformation bei erzeugter Struktur ermittelt und bei nicht erzeugter Struktur nicht ermittelt wird. Dabei können bevorzugt für die Überprüfung der Kamera voneinander unterschiedliche Strukturen verwendet werden, die gleichzeitig oder zeitlich nacheinander im Überwachungsbereich erzeugt werden. Die genannten Überprüfung der Kamera müssen bei dieser Alternative zu einem Zeitpunkt vorgenommen werden, zu dem keine Überwachungsfunktion stattfindet bzw. die Überwachungsfunktion kurzzeitig unterbrochen werden kann.

Alternativ ist es möglich, sowohl bei der Aufnahme von Referenzbildern als auch bei der Aufnahme von aktuellen Bildern pro Aufnahme immer ein Bild bei erzeugter und ein Bild bei nicht erzeugter Struktur aufzunehmen und anschließend nur das Differenzbild aus diesen beiden Bildern weiter zu verarbeiten. Es wird in diesem Fall immer dann eine "Objekterkennungsreaktion" ausgelöst, wenn sich eine Abweichung zwischen dem Referenzdifferenzbild und einem aktuell aufgenommenen Differenzbild ergibt. Diese Abweichung ist dann entweder durch ein im Überwachungsbereich vorhandenes Objekt oder durch eine Fehlfunktion der Kamera begründet, so daß beispielsweise ein Abschalten einer Maschine in den beiden Gefahrfällen eines Objektes im Überwachungsbereich oder einer Fehlfunktion der Kamera sichergestellt werden kann.

Weitere bevorzugte Ausführungsformen der Erfindung sind in den Unteransprüchen angegeben.

Die Erfindung wird nachfolgend unter Bezugnahme auf Ausführungsbeispiele anhand der Zeichnungen beschrieben; in diesen zeigen:
- Fig. 1: ein Flußdiagramm der Abläufe des erfindungsgemäßen Verfahrens zur Erfassung eines sich im Überwachungsbereich einer Kamera bewegenden Objektes,
- Fig. 2: ein Flußdiagramm der Abläufe bei der Bestimmung der erfindungsgemäß zum Einsatz gelangenden Referenzgröße,
- Fig. 3: die schematische Darstellung einer erfindungsgemäßen Vorrichtung zur Durchführung des erfindungsgemäßen Verfahrens, und
- Fig. 4a - c: verschiedene Verläufe von Strukturinformationen, die aus aktuell aufgenommenen Bildern gewonnen werden und aus denen erfindungsgemäße Meßgrößen ableitbar sind.

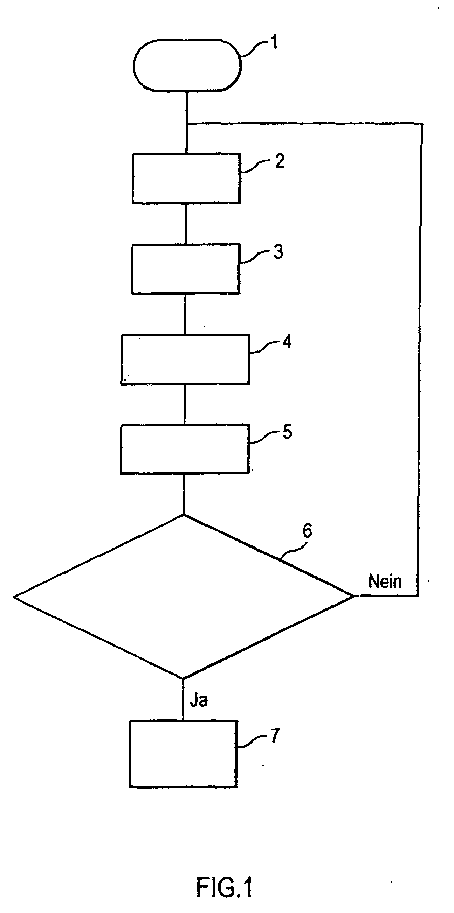

In Fig. 1 ist ein Flußdiagramm gezeigt, das die einzelnen Verfahrensschritte veranschaulicht, die bei dem erfindungsgemäßen Verfahren zur Erfassung eines sich im Überwachungsbereich einer Kamera bewegenden Objektes ausgeführt werden.

Mit 1 ist der Ausgangs- bzw. Startpunkt des Verfahrens bezeichnet.

Zu Beginn wird in Schritt 2 eine Initialisierung des Gesamtsystems vorgenommen, was das Zurücksetzen von Variablen auf ihre Ausgangswerte, das Leeren von Speichern in einer Auswerteeinheit sowie die Überführen der Kamera in Aufnahmebereitschaft usw. umfaßt. Dies wird an dieser Stelle nicht weiter ausgeführt, da derartige Initialisierungsvorgänge Stand der Technik und für den Fachmann selbstverständlich sind.

Bei Schritt 3 wird mittels einer Kamera ein aktuelles Bild eines Überwachungsbereichs aufgenommen, was gleichbedeutend damit ist, daß von einem beliebigen Bildsensor ein virtuelles, aus Pixeln bestehendes Bild des überwachten Bereiches erzeugt wird, das in einem Bildspeicher elektronisch abgelegt wird. Die Pixel können im einfachsten Fall binär dargestellt werden, d.h., schwarz oder weiß sein, unterschiedliche Graustufen besitzen oder Farben mit unterschiedlicher Farbabstufungen aufweisen.

Eine Strukturerkennung wird von einer Erkennungseinrichtung der Auswerteeinheit bei Schritt 4 vorgenommen. Die Erkennungseinrichtung benutzt zu diesem Zweck einen Algorithmus, der in der Lage ist, aus dem in einem Bildspeicher abgelegten Bild Strukturen, wie beispielsweise Linien-, Gitter- oder Flächenbereiche, zu erkennen, d.h. einen mathematischen Zusammenhang zwischen Pixeln, die ein Objekt oder einen Teil eines Objektes darstellen, herzustellen.

Aus einer solchen Struktur kann eine Ableitungseinrichtung der Auswerteeinheit bei Schritt 5 eine Meßgröße ableiten, die sich beispielsweise bei einer vorgegebenen, zulässigen Verschiebung oder Drehung der Struktur nicht verändert.
Eine solche Meßgröße kann bei einer eine Gitterstruktur beinhaltenden Strukturinformation, der Abstand benachbarter Gitterlinien, der Winkel unter dem sich Gitterlinien schneiden, die von bestimmten Gitterlinien eingeschlossene Fläche, etc.
Wenn die Strukturinformation z.B. eine Fläche oder ein Flächensegment umfaßt, kann die Meßgröße beispielsweise gleich dem Flächenintegral sein.

Bei Schritt 6 wird dann von einem Komparator die ermittelte Meßgröße mit einer aus einer entsprechenden Struktur eines Referenzbildes berechneten Referenzgröße verglichen, die ebenso ermittelt wird, wie die aktuellen Meßgrößen und aus einem Bild eines objektfreien Überwachungsbereich abgeleitet ist. Wenn der Vergleich der Meßgröße mit der Referenzgröße ergibt, daß die Meßgröße ein definiertes Maß, d. h. einen Schwellenwert, überschreitet, wird zu Schritt 7 verzweigt, bei dem eine Reaktionsauslöseeinrichtung der Auswerteeinheit eine vordefinierte Reaktion auslöst, wie beispielsweise das Ausgeben eines Alarmsignals oder das Abschalten einer Maschine. Überschreitet das Vergleichsergebnis den Schwellenwert nicht, springt die Routine zu Schritt 3 zurück, und es wird eine neues Bild des Überwachungsbereichs aufgenommen. Anschließend läuft das beschriebene Verfahren von vorne ab.

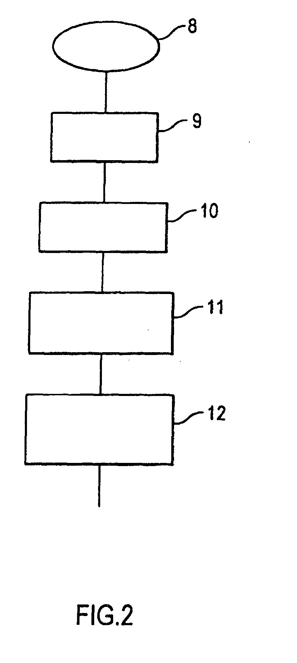

Fig. 2 veranschaulicht die Abläufe bei der Bestimmung der erfindungsgemäß zum Einsatz gelangenden Referenzgröße. Es wird nach dem Start bei 8 zunächst bei Schritt 9 mittels der Kamera ein Referenzbild des Überwachungsbereiches aufgenommen, ohne daß sich ein nicht zur erlaubten bzw. zulässigen Szene gehörendes Objekt im Überwachungsbereich befindet.

Im Anschluß daran wird, wie bei Fig. 1 für Schritt 3 beschrieben, bei Schritt 10 eine Struktur in dem von der Kamera gelieferten und im Bildspeicher hinterlegten Bild erkannt.

Die Auswerteeinheit leitet bei Schritt 11 aus der erkannten Struktur eine bezüglich vorherbestimmter, in Verbindung mit Schritt 4 (Fig. 1) erläuterter Bildänderungen invariante Größe ab und legt diese als Referenzgröße fest.

Weiter wird bei Schritt 12 ein Schwellenwert festgelegt, der eine maximal zulässige Maßabweichung zwischen einer zu einem späteren Zeitpunkt ermittelten aktuellen Meßgröße und der Referenzgröße darstellt, ohne daß von der Auswerteeinheit eine Reaktion auszulösen ist.

Das Verfahren gemäß Fig. 2 wird üblicherweise im Rahmen des Schrittes 2 gemäß Fig. 1 ablaufen.

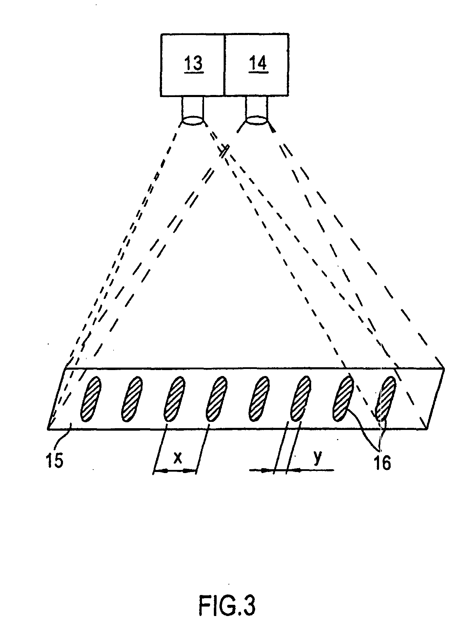

Fig. 3 zeigt- in schematischer Darstellung einer Kamera 13, sowie eine Beleuchtungs- und Projektionseinrichtung 14, die beide in einem gemeinsamen Gehäuse angeordnet sind und deren Objektive auf einen Überwachungsbereich 15 ausgerichtet sind. Die Sichtfelder der Objektive der Kamera 13 und der Beleuchtungs- und Projektionseinrichtung 14 überlappen einander derart, daß von beiden Einrichtungen zumindest im wesentlichen der gleiche Abschnitt des Überwachungsbereichs 15 erfaßt wird. Der Überwachungsbereich 15 kann beispielsweise die Begrenzung eines Gefahrenbereichs vor einer Maschine darstellen.

Die Beleuchtungs- und Projektionseinrichtung 14 projiziert eine Struktur von auf hellem Hintergrund befindlichen dunklen Elementen 16 auf den Überwachungsbereich 15. Die Kamera 13 erfaßt ein Bild des Überwachungsbereichs 15 mit darauf projizierter Struktur und liefert eine entsprechende Bildinformation an eine nicht dargestellte Auswerteeinheit. Diese Auswerteeinheit ermittelt aus dieser Bildinformation dann eine der projizierten Struktur entsprechende Strukturinformation, woraufhin aus dieser Strukturinformation beispielsweise die in Fig. 3 dargestellten Meßgrößen x und y ermittelt werden können. Die Meßgrößen x und y stellen beide Relativinformationen dar, die sich jeweils nicht auf die absolute Helligkeit von Pixeln des aufgenommenen Bildes beziehen, sondern ausschließlich Informationen repräsentieren, die Unterschiede zwischen verschiedenen Bildbereichen betreffen. So repräsentiert beispielsweise die Meßgröße x den gegenseitigen Abstand zweier dunkler Strukturbereiche. Die Meßgröße y repräsentiert die Breite eines dunklen Strukturbereichs. Die beiden Meßgrößen x und y sind hier lediglich beispielhaft erwähnt, es lassen sich aus der Strukturinformation gemäß Fig. 3 beliebige weitere Meßgrößen, wie beispielsweise Farbunterschiede, Abstände zu Referenzpunkten, Helligkeitsunterschiede, etc. ableiten.

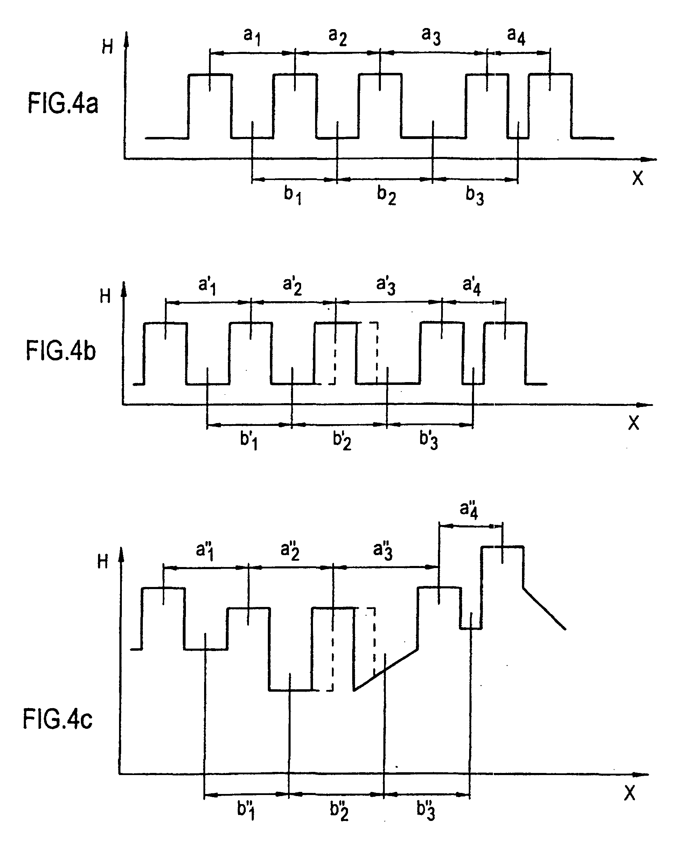

Die Fig. 4a bis c zeigen über dem Ort x aufgetragene, eindimensionale Helligkeitsverläufe einer beispielhaft ausgewählten Dimension eines Referenzbildes sowie aktuell aufgenommener Bilder mit daraus abgeleiteten Meßgrößen. Im Rahmen der Erfindung sind jedoch ebenso Meßgrößen aus 2- oder 3-dimensionalen Bildinformationen ableitbar.

In Fig. 4a ist dabei der Helligkeitsverlauf entlang einer Linie eines Referenzbildes gezeigt. Das Referenzbild wird bei objektfreiem Überwachungsbereich aufgenommen und zeigt eine Struktur mit fünf, in unterschiedlichen Abständen zueinander befindlichen hellen Bereichen, die jeweils durch dunkle Bereiche voneinander abgegrenzt sind. Die aus dem Referenzbild ermittelten Referenzgrößen a₁ bis a₄ betreffen die gegenseitigen Abstände von benachbarten hellen Strukturbereichen, wohingegen die Referenzgrößen b₁ bis b₃ die Abstände von einander benachbarten dunklen Strukturbereichen repräsentieren.

Die Referenzgrößen a₁ bis a₄ und b₁ bis b₃ werden von einer Auswerteeinheit gespeichert, um nachfolgend beim Überwachungsbetrieb mit aktuell ermittelten Meßgrößen verglichen werden zu können.

Fig. 4b zeigt den Helligkeitsverlauf entlang einer Linie eines während des Überwachungsbetriebs aktuell aufgenommenen Bildes, wobei während der Aufnahme dieses aktuellen Bildes eine - zulässige - Verschiebung zwi- . schen Kamera 13 und Überwachungsbereich 15 (siehe Fig. 3) stattgefunden hat. Diese Verschiebung führt dazu, daß das gesamte aufgenommene Bild ebenfalls verschoben aufgenommen wurde, was dementsprechend zu einer Verschiebung des gesamten Helligkeitsverlaufs gemäß Fig. 4b gegenüber Fig. 4a führt. Dabei werden jedoch alle hellen und dunklen Bereiche in gleicher Weise verschoben, so daß die gemäß Fig. 4b ermittelten aktuellen Meßgrößen a'₁ - a'₄ und b'₁ bis b'₃ jeweils gegenüber den gemäß Fig. 4a ermittelten Referenzgrößen a₁ bis a₄ und b₁ bis b₃ unverändert bleiben. Da somit keine Abweichung zwischen Meß- und Referenzgrößen feststellbar ist, wird auch keine Reaktion ausgelöst.

Wenn nun jedoch ein unzulässiges Objekt in den Überwachungsbereich hineinbewegt wird, ist es beispielsweise möglich, daß sich der Projektionsort eines hellen Bereiches verschiebt, was in Fig. 4b beispielhaft gestrichelt dargestellt ist. Diese Verschiebung führt dann zu einer Veränderung der Meßgrößen a'₂, a'₃, b'₁ und b'₃. Diese aktuellen Meßgrößen entsprechen dann nicht mehr den ihnen zugeordneten Referenzgrößen, so daß in erwünschter Weise eine Reaktion ausgelöst wird.

Die Fig. 4a und 4b zeigen somit, daß eine Verschiebung zwischen Kamera und Überwachungsbereich insgesamt nicht zu einer Reaktionsauslösung führt, sondern nur dann eine Reaktion ausgelöst wird, wenn sich tatsächlich ein unzulässiges Objekt im Überwachungsbereich befindet. Entsprechendes gilt auch dann, wenn dem aktuell aufgenommenen Bild ein variabler Störlichtpegel überlagert wird, wie dies beispielhaft in Fig. 4c dargestellt ist.

Aus Fig. 4c geht hervor, daß sich die Abstände und Breiten der hellen und dunklen Strukturbereiche gegenüber Fig. 4b nicht verändern, wenn dem aktuell aufgenommenen Bild ein variables Störsignal überlagert wird. Auch das in Fig. 4c dargestellte Summensignal aus Nutz- und Störsignal läßt es ohne weiteres zu, die Abstände zwischen den hellen Bereichen sowie zwischen den dunklen Bereichen zu ermitteln und dementsprechend die Meßgrößen zu berechnen. Diese Meßgrößen a"₁ bis a"₄ und b"₁ bis b"₃ sind identisch zu den Meßgrößen gemäß Fig. 4b, so daß auch bei dem in Fig. 4c dargestellten Verlauf keine Reaktion ausgelöst wird.
Wenn jedoch infolge eines in den Überwachungsbereich eindringenden Objektes eine Verschiebung des mittleren Helligkeitsbereichs auftritt, die in Fig. 4c wiederum gestrichelt dargestellt ist, verändern sich die Meßgrößen ebenso, wie dies in Verbindung mit Fig. 4b beschrieben wurde. Dementsprechend wird dann auch eine Reaktion ausgelöst.

Die Verwendung der Abstände zwischen hellen Bereichen und dunklen Bereichen ist in Fig. 4 wiederum nur beispielhaft dargestellt, es lassen sich ebenso beliebige andere Meßgrößen aus Relativinformationen zwischen verschiedenen Bildbereichen ableiten, so daß auch mit diesen anderen Meßgrößen die erfindungsgemäßen Vorteile erreicht werden können.

## Patentansprüche

1. Verfahren zur Erfassung eines sich im Überwachungsbereich (15) einer Kamera (13) bewegenden Objektes, wobei
- von der Kamera (13) ein aktuelles Bild des Überwachungsbereiches aufgenommen wird,
- aus dem aktuell aufgenommenen Bild mindestens eine aktuelle Meßgröße abgeleitet wird, die Aufschluß über Unterschiede zwischen zumindest zwei verschiedenen Bildbereichen liefert, und die gegenüber Bildverschiebungen, Bilddrehungen und/oder Bildgrößenänderungen invariant ist,
- diese aktuelle Meßgröße mit einer entsprechenden, aus einem von der Kamera (13) aufgenommenen Referenzbild abgeleiteten und gespeicherten Referenzgröße verglichen wird, und
- bei einer vorgegebenen Abweichung der aktuellen Meßgröße von der Referenzgröße eine Objekterkennungsreaktion ausgelöst wird.

2. Verfahren nach Anspruch 1,
**dadurch gekennzeichnet,**
**daß** dem Referenzbild sowie dem aktuell aufgenommenen Bild eine Struktur überlagert wird, die Bestandteil des Bildes ist, und daß die Referenz- und Meßgröße aus der entsprechenden Strukturinformation gewonnen wird.

3. Verfahren nach Anspruch 2,
**dadurch gekennzeichnet,**
**daß** die Struktur im Überwachungsbereich (15) während der Aufnahme des Referenzbildes und der aktuellen Bilder des Überwachungsbereichs mittels einer Projektionseinrichtung (14) und/oder mittels eines bewegten Lichtstrahls erzeugt wird.

4. Verfahren nach einem der Ansprüche 2 oder 3,
**dadurch gekennzeichnet,**
**daß** gleichzeitig oder zeitlich nacheinander voneinander verschiedene Strukturen im Überwachungsbereich (15) erzeugt werden.

5. Verfahren nach Anspruch 4,
**dadurch gekennzeichnet,**
**daß** für die Erzeugung der verschiedenen Strukturen unterschiedliche Projektionseinrichtungen ( 14) verwendet werden.

6. Verfahren nach einem der vorhergehenden Ansprüche,
**dadurch gekennzeichnet,**
**daß** als Referenzbild ein Bild eines objetkfreien Überwachungsbereichs (15) verwendet wird.

7. Verfahren nach einem der vorhergehenden Ansprüche,
**dadurch gekennzeichnet,**
**daß** eine Reaktion ausgelöst wird, wenn der Vergleich der aktuellen Meßgröße mit der Referenzgröße einen Vergleichswert liefert, der außerhalb eines vorgegebenen Toleranzbereichs liegt.

8. Verfahren nach einem der vorhergehenden Ansprüche,
**dadurch gekennzeichnet,**
**daß** die Bild- oder Strukturinformation unter anderem auf Referenzpunkte bezogene Informationen umfaßt, wobei die Referenzpunkte insbesondere die Grenzen des Überwachixngsbereichs (15) markieren.

9. Verfahren nach Anspruch 8,
**dadurch gekennzeichnet,**
**daß** für die Markierung der Referenzpunkte Reflektoren verwendet werden, die relativ zum Überwachungsbereich (15) an unveränderlichen Positionen angeordnet werden.

10. Verfahren nach einem der vorhergehenden Ansprüche,
**dadurch gekennzeichnet,**
**daß** aus der aktuellen Bild- oder Strukturinformation eine Vielzahl von aktuellen Meßgrößen gleichen oder unterschiedlichen Typs abgeleitet und mit entsprechenden, aus der Bild- oder Strukturinformation des Referenzbildes abgeleiteten und gespeicherten Referenzgrößen verglichen wird.

11. Verfahren nach einem der vorhergehenden Ansprüche,
**dadurch gekennzeichnet,**
**daß** die Meß- bzw. Referenzgröße(n) eine oder mehrere der nachfolgenden Informationen beinhaltet:
- Abstand zwischen zwei verschiedenen Bild- oder Strukturbereichen oder zwischen einem Referenzpunkt und einem Bild- oder Strukturbereich
- Helligkeitsunterschied zwischen zwei verschiedenen Bild- oder Strukturbereichen oder zwischen einem Referenzpunkt und einem Bild- oder Strukturbereich
- Farbunterschied zwischen zwei verschiedenen Bild- oder Strukturbereichen oder zwischen einem Referenzpunkt und einem Bildoder Strukturbereich
- Helligkeitsgradient zwischen zwei verschiedenen Bild- oder Strukturbereichen oder zwischen einem Referenzpunkt und einem Bild- oder Strukturbereich.

12. Verfahren nach einem der vorhergehenden Ansprüche,
**dadurch gekennzeichnet,**
**daß** eine Korrelationsfunktion zwischen zumindest einem Bereich der aktuellen Bild- oder Strukturinformation und einem entsprechenden Bereich der Bild- oder Strukturinformation des Referenzbildes berechnet wird und der Verlauf dieser Korrelationsfunktion und/oder bestimmte Werte dieser Korrelationsfurtktion zur Entscheidung bezüglich des Auslösens einer Objekterkennungsreaktion herangezogen werden.

13. Verfahren nach einem der vorhergehenden Ansprüche,
**dadurch gekennzeichnet,**
**daß** der Überwachungsbereich (15) während der Aufnahme des Referenzbildes und der aktuellen Bilder des Überwachungsbereichs (15) mittels zumindest einer Beleuchtungsquelle (14) ausgeleuchtet wird.

14. Verfahren nach einem der Ansprüche 2 bis 13,
**dadurch gekennzeichnet,**
**daß** die Funktionsfähigkeit der Kamera (13) geprüft wird, indem regelmäßig Bilder mit und ohne im Überwachungsbereich erzeugter Struktur aufgenommen werden und überprüft wird, ob die Strukturinformation bei erzeugter Struktur ermittelt und bei nicht erzeugter Struktur nicht ermittelt wird.

15. Verfahren nach Anspruch 14,
**dadurch gekennzeichnet,**
**daß** für die Überprüfung der Kamera (13) voneinander unterschiedliche Strukturen verwendet werden, die gleichzeitig oder zeitlich nacheinander im Überwachungsbereich (15) erzeugt werden.

16. Verfahren nach einem der vorhergehenden Ansprüche,
**dadurch gekennzeichnet,**
**daß** sowohl bei der Aufnahme von Referenzbildern als auch bei der Aufnahme von aktuellen Bildern pro Aufnahme immer ein Bild bei erzeugter und ein Bild bei nicht erzeugter Struktur aufgenommen und anschließend nur das Differenzbild aus diesen beiden Bildern weiterverarbeitet wird.

17. Verfahren nach Anspruch 16,
**dadurch gekennzeichnet,**
immer dann eine Objekterkennungs- oder Fehlfunktionsreaktion ausgelöst wird, wenn sich eine Abweichung zwischen dem Referenzdifferenzbild und einem aktuell aufgenommenen Differenzbild ergibt.

18. Vorrichtung zur Erfassung eines sich in einem Überwachungsbereich (15) bewegenden Objektes mit:
- einer Kamera (13) zur Aufnahme eines Bildes des Überwachungsbereiches (15),
- einer Einrichtung zur Ableitung zumindest einer aktuellen Meßgröße aus dem aktuell aufgenommenen Bild, wobei die Meßgröße Aufschluß über Unterschiede zwischen zumindest zwei verschiedenen Bildbereichen liefert, und gegenüber Bildverschiebungen, Bilddrehungen und/oder Bildgrößenänderungen invariant ist,
- einer Vergleichseinrichtung zum Vergleich dieser aktuelle Meßgröße mit einer entsprechenden, aus einem von der Kamera (13) aufgenommenen Referenzbild abgeleiteten und gespeicherten Referenzgröße, und
- einer Objekterkennungsstufe zur Auslösung einer Objekterkennungsreaktion bei Feststellung einer vorgegebenen Abweichung der aktuellen Meßgröße von der Referenzgröße.

19. Vorrichtung nach Anspruch 18,
**dadurch gekennzeichnet,**
**daß** im Überwachungsbereich (15) oder am Rand des Überwachungsbereichs (15) Referenzpunkte vorgesehen sind, die insbesondere die Grenzen des Überwachungsbereichs (15) markieren.

20. Vorrichtung nach Anspruch 19,
**dadurch gekennzeichnet,**
**daß** die Referenzpunkte als Reflektoren ausgebildet sind, die relativ zum Überwachungsbereich (15) an unveränderlichen Positionen angeordnet sind.

21. Vorrichtung nach einem der Ansprüche 18 bis 20,
**dadurch gekennzeichnet,**
**daß** zur Erzeugung einer Struktur im Überwachungsbereich (15) während der Aufnahme des Referenzbildes und der aktuellen Bilder des Überwachungsbereichs (13) zumindest eine Projektionseinrichtung (14) und/oder zumindest eine Einrichtung zur Erzeugung eines bewegten Lichtstrahls vorgesehen ist.

22. Vorrichtung nach einem der Ansprüche 18 bis 21,
**dadurch gekennzeichnet,**
**daß** zumindest eine Beleuchtungsquelle (14) zur Ausleuchtung des Überwachungsbereichs (15) vorgesehen ist.

## Claims

1. A method for the detection of an object moving in the monitored zone (15) of a camera (13), wherein
- an actual image of the monitored zone is taken by the camera (13);
- at least one actual measured value is derived from the actually recorded image which provides information on differences between at least two different image regions and which is invariant with respect to image displacements, image rotations and/or image size changes;
- this actual measured value is compared with a corresponding stored reference value derived from a reference image taken by the camera (13); and
- an object recognition reaction is triggered on a pre-set deviation of the actual measured value from the reference value.

2. A method in accordance with claim 1, **characterized in that** a structure, which is a component of the image, is superimposed on the reference image and the actually taken image; and **in that** the reference value and the measured value are gained from the corresponding structure information.

3. A method in accordance with claim 2, **characterized in that** the structure in the monitored zone (15) is generated during the recording of the reference image and of the actual images of the monitored zone by means of a projection device (14) and/or by means of a moved light beam.

4. A method in accordance with any one of claims 2 or 3, **characterized in that** mutually different structures are generated in the monitored zone (15) simultaneously or successively in time.

5. A method in accordance with claim 4, **characterized in that** different projection devices (14) are used for the generation of the different structures.

6. A method in accordance with any one of the preceding claims, **characterized in that** an image of an object-free monitored zone (15) is used as the reference image.

7. A method in accordance with any one of the preceding claims, **characterized in that** a reaction is triggered when the comparison of the actual measured value with the reference value provides a comparison value which lies outside a pre-set tolerance range.

8. A method in accordance with any one of the preceding claims, **characterized in that** the image information or structure information comprises, among other things, information related to reference points, with the reference points in particular marking the boundaries of the monitored zone (15).

9. A method in accordance with claim 8, **characterized in that** reflectors are used for the marking of the reference points and are arranged at invariant positions relative to the monitored zone (15).

10. A method in accordance with any one of the preceding claims, **characterized in that** a plurality of actual measured values of the same type or of a different type is derived from the actual image information or structure information and is compared with corresponding stored reference values derived from the image information or from the structure information of the reference image.

11. A method in accordance with any one of the preceding claims, **characterized in that** the measured value(s) or reference value(s) include(s) one or more pieces of the following information:
- distance between two different image regions or structure regions or between a reference point and an image region or a structure region;
- brightness difference between two different image regions or structure regions or between a reference point and an image region or a structure region;
- color difference between two different image regions or structure regions or between a reference point and an image region or a structure region;
- brightness gradient between two different image regions or structure regions or between a reference point and an image region or a structure region.

12. A method in accordance with any one of the preceding claims, **characterized in that** a correlation function is calculated between at least one region of the actual image information or structure information and a corresponding region of the image information or of the structure information of the reference image and the shape of this correlation function and/or determined values of this correlation function are used for the decision with respect to the triggering of an object recognition reaction.

13. A method in accordance with any one of the preceding claims, **characterized in that** the monitored zone (15) is illuminated by means of at least one light source (14) during the recording of the reference image and of the actual images of the monitored zone (15).

14. A method in accordance with any one of claims 2 to 13, **characterized in that** a check is made whether the camera (13) is in working order by taking images regularly with and without a structure generated in the monitored zone and by checking whether the structure information is found with a generated structure and is not found with no structure generated.

15. A method in accordance with claim 14, **characterized in that** mutually different structures, which are generated simultaneously or successively in time in the monitored zone (15), are used for the checking of the camera (13).

16. A method in accordance with any one of the preceding claims, **characterized in that** one image is always taken per shot with a generated structure and one with no structure generated, both in the taking of reference images and in the taking of actual images and subsequently only the difference image from these two images is further processed.

17. A method in accordance with claim 16, **characterized in that** an objection recognition reaction or a malfunction reaction is always triggered when a difference results between the reference difference image and an actually taken difference image.

18. An apparatus for the detection of an object moving in a monitored zone (15) comprising:
- a camera (13) to take an image of the monitored zone (15);
- a device for the derivation of at least one actual measured value from the actually taken image, with the measured value supplying information on differences between at least two different image regions and being invariant with respect to image displacements, image rotations and/or image size changes;
- a comparison device for the comparison of this actual measured value with a corresponding stored reference value derived from a reference image taken by the camera (13); and
- an object recognition stage for the triggering of an object recognition reaction on the finding of a pre-set deviation of the actual measured value from the reference value.

19. An apparatus in accordance with claim 18, **characterized in that** reference points, which in particular mark the boundaries of the monitored zone (15), are provided in the monitored zone (15) or at the edge of the monitored zone (15).

20. An apparatus in accordance with claim 19, **characterized in that** the reference points are formed as reflectors which are arranged at invariant positions relative to the monitored zone (15).

21. An apparatus in accordance with any one of claims 18 to 20, **characterized in that** at least one projection device (14) and/or at least one device for the generation of a moved light beam is provided for the generation of a structure in the monitored zone (15) during the taking of the reference image and of the actual images of the monitored zone (13).

22. An apparatus in accordance with any one of claims 18 to 21, **characterized in that** at least one light source (14) is provided for the illumination of the monitored zone (15).

## Revendications

1. Procédé pour la détection d'un objet se déplaçant dans la zone de surveillance (15) d'une caméra (13), dans lequel
- on enregistre avec la caméra (13) une image actuelle de la zone de surveillance,
- à partir de l'image actuelle enregistrée, on déduit au moins une grandeur de mesure actuelle, qui fournit une conclusion sur des différences entre au moins deux zones d'image différentes, et qui est insensible à des déplacements d'image, des rotations d'image et/ou des changements de grossissement d'image,
- on compare cette grandeur de mesure actuelle avec une grandeur de référence correspondante, déduite d'une image de référence enregistrée par la caméra (13) et mémorisée, et
- on déclenche une réaction de reconnaissance d'objet en cas d'écart prédéterminé entre la grandeur de mesure actuelle et la grandeur de référence.

2. Procédé selon la revendication 1, **caractérisé en ce que** l'on superpose à l'image de référence ainsi qu'à l'image actuelle enregistrée une structure, qui est une composante de l'image, et **en ce que** l'on obtient la grandeur de référence et la grandeur de mesure à partir de l'information de la structure correspondante.

3. Procédé selon la revendication 2, **caractérisé en ce que** l'on produit la structure dans la zone de surveillance (15) pendant l'enregistrement de l'image de référence et des images actuelles de la zone de surveillance au moyen d'un dispositif de projection (14) et/ou au moyen d'un faisceau laser mobile.

4. Procédé selon l'une quelconque des revendications 2 ou 3, **caractérisé en ce que** l'on produit différentes structures dans la zone de surveillance (15) simultanément ou l'une après l'autre dans le temps.

5. Procédé selon la revendication 4, **caractérisé en ce que** l'on utilise différents dispositifs de projection (14) pour la production des différentes structures.

6. Procédé selon l'une quelconque des revendications précédentes, **caractérisé en ce que** l'on utilise comme image de référence une image d'une zone de surveillance (15) libre de tout objet.

7. Procédé selon l'une quelconque des revendications précédentes, **caractérisé en** de que l'on déclenche une réaction lorsque la comparaison de la grandeur de mesure actuelle avec la grandeur de référence fournit une valeur de comparaison qui se situe en dehors d'une zone de tolérance prédéterminée.

8. Procédé selon l'une quelconque des revendications précédentes, **caractérisé en ce que** l'information de l'image ou l'information de la structure comprend entre autres des informations relatives à des points de référence, les points de référence marquant en particulier les limites de la zone de surveillance (15).

9. Procédé selon la revendication 8, **caractérisé en ce que** l'on utilise pour le marquage des points de référence, des réflecteurs qui sont disposés dans des positions invariables par rapport à la zone de surveillance (15).

10. Procédé selon l'une quelconque des revendications précédentes, **caractérisé en ce que** l'on déduit, à partir des informations de l'image ou de la structure actuelles, une pluralité de grandeurs de mesure de même type ou de type différent et on les compare avec des grandeurs de référence correspondantes, déduites de l'information de l'image ou de la structure de l'image de référence et mémorisées.

11. Procédé selon l'une quelconque des revendications précédentes, **caractérisé en ce que** la (les) grandeur(s) de mesure respectivement de référence contient (contiennent) une ou plusieurs des informations suivantes :
- la distance entre deux zones de l'image ou de la structure différentes ou entre un point de référence et une zone de l'image ou de la structure,
- la différence de luminosité entre deux zones de l'image ou de la structure différentes ou entre un point de référence et une zone de l'image ou de la structure,
- la différence de couleur entre deux zones de l'image ou de la structure différentes ou entre un point de référence et une zone de l'image ou de la structure,
- le gradient de luminosité entre deux zones de l'image ou de la structure différentes ou entre un point de référence et une zone de l'image ou de la structure.

12. Procédé selon l'une quelconque des revendications précédentes, **caractérisé en ce que** l'on calcule une fonction de corrélation entre au moins une zone de l'information de l'image ou de la structure actuelle et une zone correspondante de l'information de l'image ou de la structure de l'image de référence et on tient compte de l'allure de cette fonction de corrélation et/ou de valeurs déterminées de cette fonction de corrélation pour prendre une décision concernant le déclenchement d'une réaction de reconnaissance d'objet.

13. Procédé selon l'une quelconque des revendications précédentes, **caractérisé en ce que** l'on éclaire la zone de surveillance (15) pendant l'enregistrement de l'image de référence et des images actuelles de la zone de surveillance (15) au moyen d'au moins une source d'éclairage (14).

14. Procédé selon l'une quelconque des revendications 2 à 13, **caractérisé en ce que** l'on contrôle le bon fonctionnement de la caméra (13) en enregistrant régulièrement des images avec et sans structure produite dans la zone de surveillance et en contrôlant si l'information de la structure est détectée lorsqu'une structure est produite, et n'est pas détectée lorsqu'une structure n'est pas produite.

15. Procédé selon la revendication 14, **caractérisé en ce que** l'on utilise pour le contrôle de la caméra (13) des structures différentes les unes des autres, qui sont produites dans la zone de surveillance (15) simultanément ou l'une après l'autre dans le temps.

16. Procédé selon l'une quelconque des revendications précédentes, **caractérisé en ce que** l'on enregistre toujours, pour chaque enregistrement, une image avec une structure produite et une image avec une structure non produite, aussi bien lors de l'enregistrement d'images de référence que lors de l'enregistrement d'images actuelles, et on ne traite ensuite que l'image différentielle déduite de ces deux images.

17. Procédé selon la revendication 16, **caractérisé en ce que** l'on déclenche une réaction de reconnaissance d'objet ou une réaction de fonction d'erreur lorsqu'il se produit un écart entre l'image différentielle de référence et une image différentielle enregistrée actuelle.

18. Dispositif pour la détection d'un objet se déplaçant dans une zone de surveillance (15), comprenant :
- une caméra (13) pour enregistrer une image de la zone de surveillance (15),
- un dispositif pour déduire au moins une grandeur de mesure actuelle à partir d'une image actuelle enregistrée, la grandeur de mesure fournissant une conclusion sur des différences entre au moins deux zones d'image différentes et étant insensible à des déplacements d'image, des rotations d'image et/ou des changements de grossissement d'image,
- un dispositif de comparaison pour comparer cette grandeur de mesure actuelle avec une grandeur de référence correspondante, déduite d'une image de référence enregistrée par la caméra (13) et mémorisée, et
- un étage de reconnaissance d'objet pour déclencher une réaction de reconnaissance d'objet en cas de constatation d'un d'écart prédéterminé entre la grandeur de mesure actuelle et la grandeur de référence.

19. Dispositif selon la revendication 18, **caractérisé en ce qu'**il est prévu dans la zone de surveillance (15) ou au bord de la zone de surveillance (15) des points de référence qui marquent en particulier les limites de la zone de référence (15).

20. Dispositif selon la revendication 19, **caractérisé en ce que** les points de référence sont formés par des réflecteurs, qui sont disposés en des positions invariables par rapport à la zone de surveillance (15).

21. Dispositif selon l'une quelconque des revendications 18 à 20, **caractérisé en ce qu'**il est prévu, pour la production d'une structure dans la zone de surveillance (15) pendant l'enregistrement de l'image de référence et des images actuelles de la zone de surveillance (15), au moins un dispositif de projection (14) et/ou au moins un dispositif pour produire un faisceau laser mobile.

22. Dispositif selon l'une quelconque des revendications 18 à 21, **caractérisé en ce qu'**il est prévu au moins une source d'éclairage (14) pour éclairer la zone de surveillance (15).
